# EUROPEAN PATENT SPECIFICATION

(11) **EP 2 527 757 B1**
(45) Date of publication and mention of the grant of the patent: **06.06.2018**
(21) Application number: 11734725.2
(22) Date of filing: 20.01.2011
(51) Int. Cl.: F24F 11/00, G05D 23/19, F25B 13/00

(54) **AIR CONDITIONER**
KLIMAANLAGE
APPAREIL DE CONDITIONNEMENT D'AIR

(30) Priority: 22.01.2010 JP 2010012179
(43) Date of publication of application: 28.11.2012
(73) Proprietor: MITSUBISHI HEAVY INDUSTRIES THERMAL SYSTEMS, LTD., Tokyo 108-8215 (JP)
(72) Inventor: SATO, Makoto, Tokyo 108-8215 (JP); KANBARA, Hiroshi, Tokyo 108-8215 (JP); KORESAWA, Takeyuki, Tokyo 108-8215 (JP)
(74) Representative: Studio Torta S.p.A.
(86) International application number: PCT/JP2011/050987
(87) International publication number: WO 2011/090119

(56) References cited:
- JP-A- 6 094 282
- JP-A- H1 073 300
- JP-A- 10 197 032
- JP-A- 10 197 032
- JP-A- 11 287 502
- JP-A- 58 096 935
- JP-A- H06 109 306
- JP-A- 2008 209 029
- JP-A- 2008 261 553
- JP-A- 2008 261 553

## Description

### Technical Field

The present invention relates to air conditioners, and in particular, to an air conditioner including a plurality of indoor units.

### Background Art

In general, for a heating operation of an air conditioner equipped with a plurality of indoor units for a single outdoor unit, a set temperature at which heating operations of the individual indoor units are stopped (thermostat OFF point) and a set temperature at which heating is started (thermostat ON point) are sometimes set.

In such a case, when the temperature in a room in which one of the indoor units is placed reaches the thermostat OFF point, the heating operation in the one indoor unit is stopped. Thereafter, when the room temperature decreases to reach the thermostat ON point, a heating operation in the one indoor unit is started.

Even if a heating operation in the one indoor unit is stopped (during a heating thermostat operation) as described above, the other indoor units sometimes continue the heating operations. This causes a problem in that the number of indoor units that perform heating operations on a refrigerant sealed in the air conditioner is increased, thus making the pressure in the heat exchangers and the like of the indoor units prone to increase.

To reduce such an increase in pressure, there is a known technique of opening an expansion valve in one of the indoor units in which a heating thermostat operation is performed to make the high-temperature, high-pressure refrigerant flow into the one indoor unit (see, for example, PTL 1).

### Citation List

### Patent Literature

{PTL 1} Japanese Unexamined Patent Application, Publication No. 2008-261553 and JP 10 197032.

### Summary of Invention

### Technical Problem

However, this causes a problem in that making high-temperature, high-pressure refrigerant flow into the one indoor unit carrying out heating thermostat operation, as described above, can cause the room in which the one indoor unit is provided to be unheated.

The room temperature is generally measured by an intake-air temperature sensor provided in the one indoor unit. However, because no room air is taken into the one indoor unit during the heating thermostat operation, the room air temperature cannot be measured accurately by the intake-air temperature sensor. Furthermore, there is a possibility that the intake-air temperature sensor will measure a temperature higher than the actual room air temperature due to the heat of the high-temperature, high-pressure refrigerant (for example, radiant heat) flowing in the one indoor unit.

The measurement of a temperature higher than the actual temperature by the intake-air temperature sensor, as described above, poses a problem in that the time required for the measured temperature to decrease to the thermostat ON point increases, thus increasing the time required to restart the heating operation, in other words, causing the room to be unheated.

To solve the above problem, PTL 1 discloses a technique for preventing the room from being unheated by shifting at least the thermostat ON point by a predetermined value.

However, this technique has a problem in that the room in which the one indoor unit is provided becomes overheated.

That is, a delay in restarting the heating operation can be avoided by shifting the thermostat ON point by the difference between a temperature measured by the intake-air temperature sensor and the actual room air temperature in a state in which the one indoor unit is carrying out the heating thermostat operation. In other words, this can avoid the room from becoming unheated.

On the other hand, since a decrease in the room air temperature while the one indoor unit is carrying out the heating thermostat operation changes according to the time during which the heating operation is continued, there is a possibility that the room will become overheated.

That is, because the walls of the room are cold immediately after the heating operation is started, the heat of the room air is absorbed by the walls, and hence the room air temperature during the heating thermostat operation decreases quickly. In contrast, after the heating operation is performed for a long time, the walls of the room are also warm, and hence it is difficult for the heat of the room air to be absorbed by the walls, and thus the room air temperature decreases gradually during the heating thermostat operation.

Here, if the shift of the thermostat ON point is set with reference to a state immediately after the heating operation is started, the intake-air temperature sensor sometimes measures a temperature lower than the thermostat ON point after shifting even if the actual room air temperature is higher than the thermostat ON point before shifting. This poses a problem in that the heating operation is restarted earlier, and thus the room becomes overheated.

The present invention has been made to solve the above problems and provides an air conditioner in which controllability of the room temperature can be enhanced by appropriately controlling the time at which a heating thermostat operation is stopped.

### Solution to Problem

To achieve the above object, the present invention provides the following solutions.

An air conditioner according to a first aspect of the present invention is an air conditioner including a plurality of indoor units for a single outdoor unit, in which a heating operation can be stopped in one of the indoor units and heating operations can be performed in the other indoor units, the air conditioner comprising: measuring units that measure the temperatures of air taken into the indoor units; and a control unit that controls restarting of the next heating operation in the one indoor unit in which the heating operation is stopped by correcting the measured temperature in the measuring unit at predetermined time intervals and by comparing the corrected measured temperature and a heating restart temperature, wherein the correction of the measured temperature is a correction whereby the absolute value of a subtraction value for the measured temperature increases according to the time that has passed after the heating operation is stopped.

With the air conditioner according to the first aspect of the present invention, non-heating due to an increase in a period during which the heating operation is stopped, that is, the period of the heating thermostat operation, can be prevented by starting the heating operation early.

Specifically, in the case where the refrigerant is made to flow into the one indoor unit in the heating thermostat operation and when the measured value in the measuring unit, that is, the measured temperature, is increased due to the radiant heat of the flowing refrigerant, the measured temperature is higher than the actual room air temperature. This increases the time required for the measured temperature to decrease to a heating restart temperature, which delays restarting of the heating operation, thus causing non-heating.

Thus, by performing correction involving subtracting the measured temperature every time a predetermined time has passed after the heating operation is stopped, by comparing the corrected measured temperature and the heating restart temperature, and by restarting the heating operation when the corrected measured temperature reaches the heating restart temperature or lower, a delay in restarting the heating operation can be reduced.

Furthermore, by increasing the absolute value of a subtraction value for the measured temperature depending on the time that has passed after the heating operation is stopped, the corrected measured temperature reaches the heating restart temperature or lower in a shorter time, so that a delay in restarting the heating operation can be prevented.

On the other hand, since the measured temperature, not a set temperature input by the user, is corrected, the room air temperature can be controlled accurately.

That is, since the heating restart temperature is determined on the basis of a set temperature input by the user, repeating the correction of the set temperature may cause the original set temperature set by the user to become unclear, thus posing the possibility that the heating restart temperature will become an unsuitable temperature. In contrast, in the case where the measured temperature is corrected, the set temperature input by the user is not corrected, and thus there is no possibility that the set temperature become unclear, and that the heating restart temperature becomes an unsuitable temperature.

In the air conditioner according to the first aspect of the present invention, preferably, the control unit controls restarting of the next heating operation of the indoor unit in which the last heating operation is stopped after a plurality of heating operations are performed by correcting the measured temperature in the measuring unit at the predetermined time intervals and by comparing the corrected measured temperature and the heating restart temperature; and if the temperature difference between the measured temperature when a determination period has passed after the last heating operation is started and a set temperature is a predetermined value or more, the correction of the measured temperature is a correction whereby the absolute value of a subtraction value for the measured temperature when the next heating operation is stopped is smaller than that in a case where the temperature difference is less than the predetermined value.

With this configuration, overheating due to a decrease in a period during which the heating operation is stopped, that is, the period of the heating thermostat operation, can be prevented by delaying starting of the heating operation.

An air conditioner according to a second aspect of the present invention is an air conditioner including a plurality of indoor units for a single outdoor unit, in which a heating operation can be stopped in one of the indoor units and heating operations can be performed in the other indoor units, the air conditioner comprising: measuring units that measure the temperatures of air taken into the indoor units; and a control unit that controls restarting of the next heating operation in the indoor unit in which the last heating operation is stopped after a plurality of heating operations are performed by correcting the measured temperature in the measuring unit at predetermined time intervals and by comparing the corrected measured temperature and a heating restart temperature, wherein if the temperature difference between the measured temperature when a determination period has passed after the last heating operation is started and a set temperature is a predetermined value or more, the correction of the measured temperature is a correction whereby the absolute value of a subtraction value for the measured temperature when the next heating operation is stopped is smaller than that in a case where the temperature difference between the measured temperature and the heating restart temperature is less than the predetermined value.

With the air conditioner according to the second aspect of the present invention, overheating due to a decrease in a period during which the heating operation is stopped, that is, the period of the heating thermostat operation, can be prevented by delaying starting of the heating operation.

Specifically, in the case where the room is sufficiently heated because a heating operation is performed for a fixed period, that is, in the case where the measured temperature when a determination time has passed after the heating operation is stopped is higher than a set temperature set by the user by a predetermined value or more, the absolute value of a subtraction value for the measured temperature is set to be small. This increases the time required for the corrected temperature to reach the heating restart temperature or lower as compared with a case where the temperature difference described above is less than the predetermined value. In other words, the time at which the heating operation is restarted can be delayed, and thus overheating can be prevented.

In the air conditioner according to the second aspect of the present invention, preferably, the correction of the measured temperature is a correction whereby the absolute value of the subtraction value for the measured temperature increases according to the time that has passed after the heating operation is stopped.

With this configuration, the corrected measured temperature can be reliably brought to a heating restart temperature or lower by increasing the absolute value of the subtraction value for the measured temperature according to the time that has passed after the heating operation is stopped. This ensures reliable restarting of the heating operation.

In the air conditioner according to the second aspect of the present invention, preferably, if the temperature difference between the measured temperature when a determination period has passed after the first heating operation or the last heating operation is started and the heating restart temperature is less than the predetermined value, the control unit controls restarting of the next heating operation in the one indoor unit by correcting the measured temperature in the measuring unit at the predetermined time intervals and by comparing the corrected measured temperature and the heating restart temperature; and the correction of the measured temperature is a correction whereby the subtraction value for the measured temperature increases according to the time that has passed after the first heating operation or the last heating operation is stopped as compared with that in a case where the temperature difference between the measured temperature and the heating restart temperature is the predetermined value or higher.

With this configuration, non-heating due to an increase in a period during which the heating operation is stopped, that is, the period of the heating thermostat operation, can be prevented by starting the heating operation early.

In the air conditioner according to the first or second aspect of the present invention, preferably, the magnitude of the absolute value of the subtraction value can be changed.

With this configuration, since the value of the corrected measured temperature can be changed by changing the magnitude of the absolute value of the subtraction value, the time required for the corrected measured temperature to reach a heating restart temperature or lower can be changed. This allows the time at which the heating operation is restarted to be changed.

In the air conditioner according to the first or second aspect of the present invention, preferably, the length of the predetermined time can be changed.

With this configuration, the timing at which control for determining whether to restart the heating operation can be changed by changing the length of the predetermined time. This allows the time at which the heating operation is restarted to be changed.

### Advantageous Effects of Invention

The air conditioner of the present invention has the advantage in that the time at which the heating thermostat operation is stopped can be brought forward by increasing the absolute value of a subtraction value in correcting the measured temperature according to the time that has passed after the heating operation is stopped, and thus the controllability of the room temperature can be enhanced.

The air conditioner of the present invention has the advantage in that, if the temperature difference between a measured temperature when a determination period has passed after the last heating operation is started and a set temperature is a predetermined value or more, the time at which the heating thermostat operation is stopped can be delayed by decreasing the absolute value of a subtraction value for the measured temperature when the next heating operation is stopped as compared with a case where the temperature difference is less than the predetermined value, and thus the controllability of the room temperature can be enhanced.

### Brief Description of Drawings

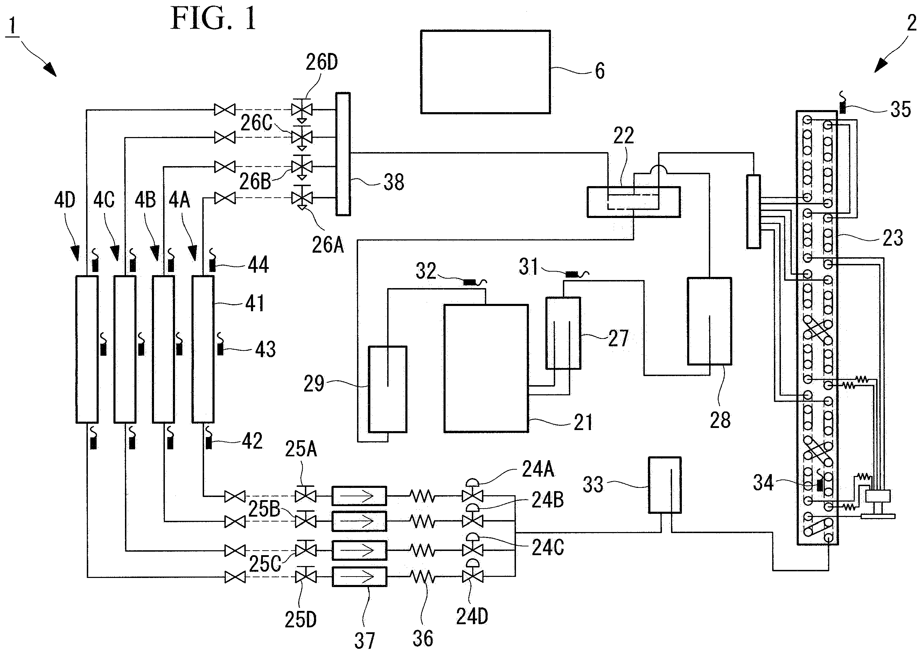

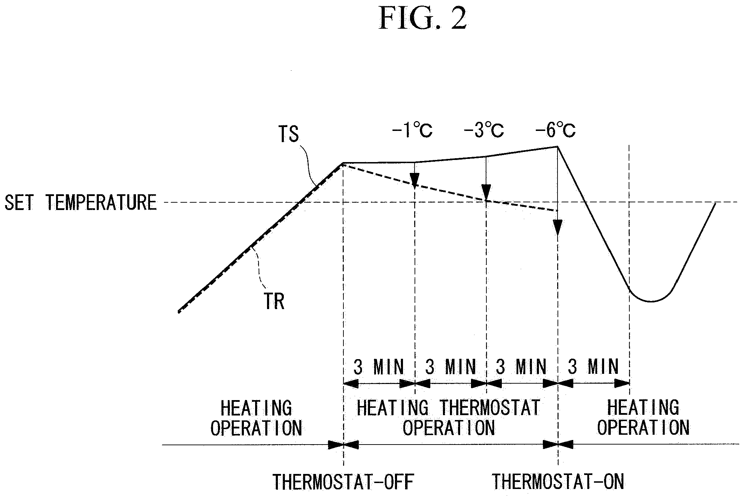

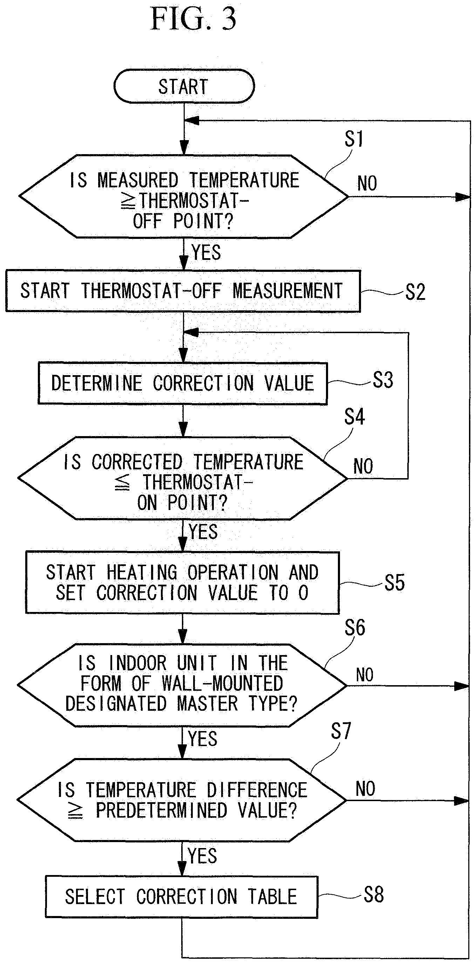

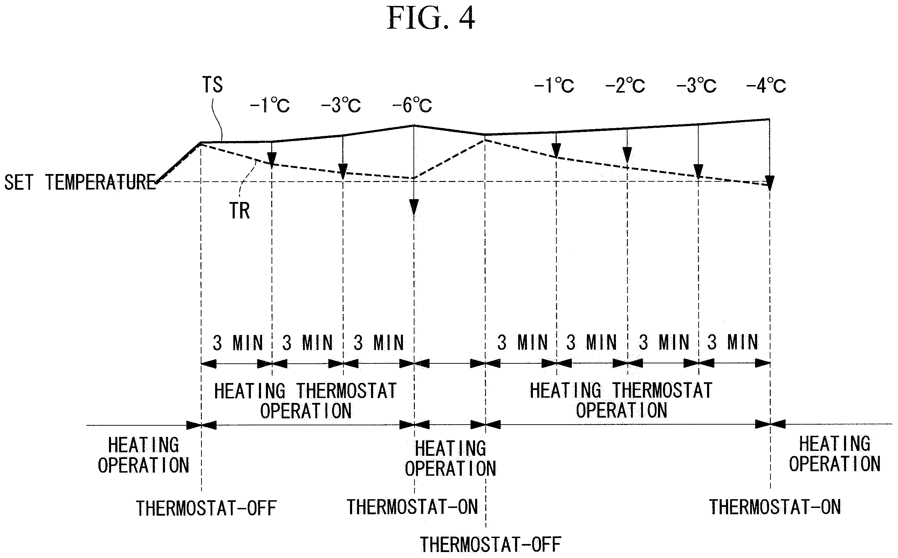

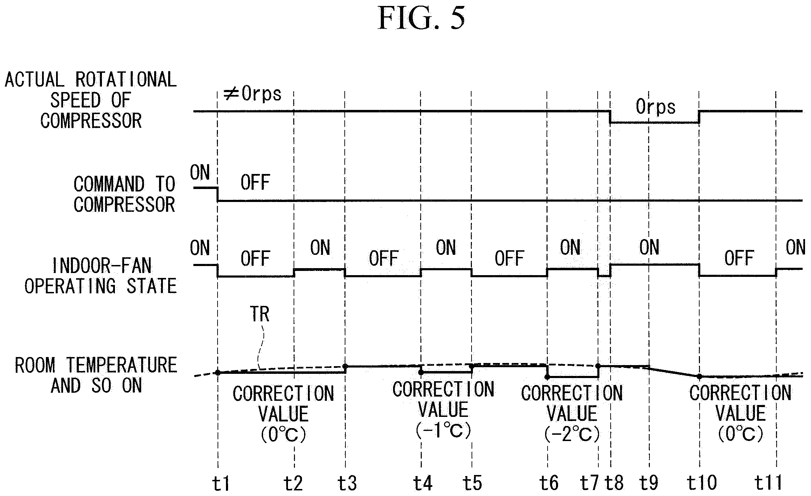

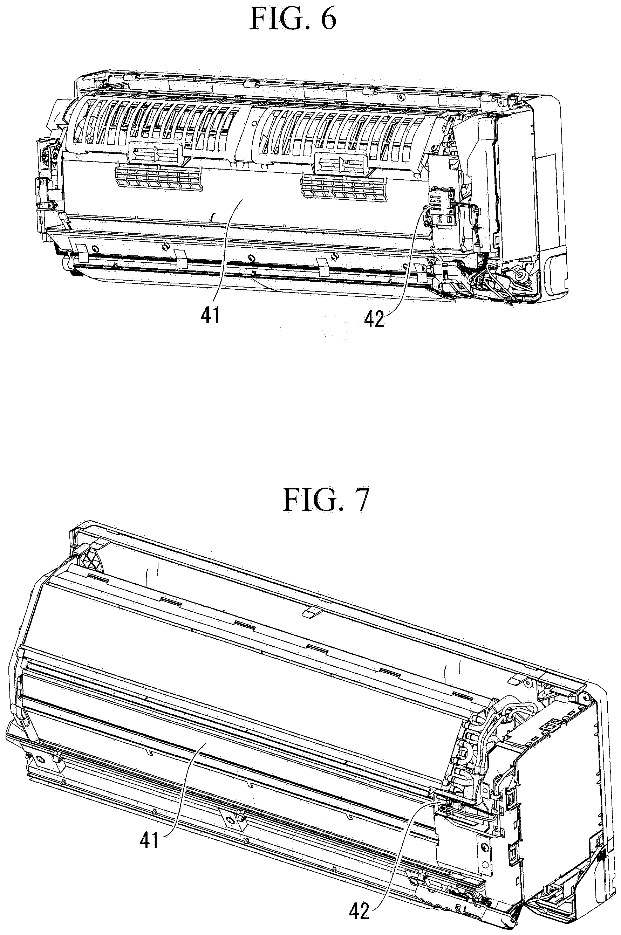

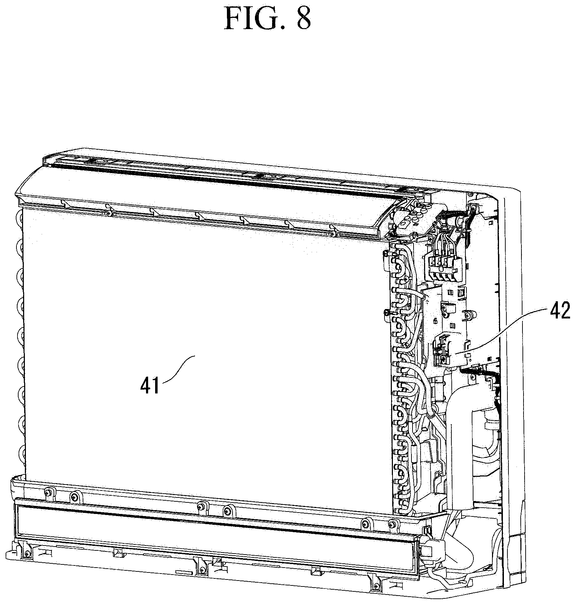

{Fig. 1} Fig. 1 is a schematic diagram illustrating the configuration of an air conditioner according to an embodiment of the present invention.
{Fig. 2} Fig. 2 is a diagram illustrating changes in a measured temperature and room air temperature during a heating operation and a heating thermostat operation.
{Fig. 3} Fig. 3 is a flowchart illustrating control in the heating thermostat operation.
{Fig. 4} Fig. 4 is a diagram illustrating changes in measured temperature and room air temperature in the case where the temperature difference between a measured temperature TS and a set temperature is a predetermined value or more in step S7 of Fig. 3.
{Fig. 5} Fig. 5 is a timing chart illustrating the operating state and so on of a compressor when the indoor unit is carrying out the heating thermostat operation.
{Fig. 6} Fig. 6 is a perspective view illustrating the arrangement of an intake sensor and an indoor heat exchanger of a wall-mounted indoor unit.
{Fig. 7} Fig. 7 is a perspective view illustrating the arrangement of an intake sensor and an indoor heat exchanger of another wall-mounted indoor unit.
{Fig. 8} Fig. 8 is a perspective view illustrating the arrangement of an intake sensor and an indoor heat exchanger of a floorstanding indoor unit.

### Description of Embodiment

An air conditioner according to an embodiment of the present invention will be described with reference to Figs. 1 to 8.

Fig. 1 is a schematic diagram illustrating the configuration of the air conditioner according to this embodiment.

As shown in Fig. 1, the air conditioner 1 of this embodiment is what is called a multi type air conditioner equipped with four indoor units 4A, 4B, 4C, and 4D and a control unit 6 that controls the operating states thereof for one outdoor unit 2. The number of indoor units is not particularly limited; it may be two or more, or more than or less than the four, described above

As shown in Fig. 1, the outdoor unit 2 is mainly provided with a compressor 21, a four-way valve 22, an outdoor heat exchanger 23, and expansion valves 24A, 24B, 24C, and 24D.

Furthermore, liquid-side control valves 25A, 25B, 25C, and 25D, and gas-side control valves 26A, 26B, 26C, and 26D are provided between the outdoor unit 2 and the indoor units 4A, 4B, 4C, and 4D.

The compressor 21 circulates a refrigerant between the single outdoor unit 2 and the four indoor units 4A, 4B, 4C, and 4D and takes in a low-temperature, low-pressure refrigerant and compresses it to form high-temperature, high-pressure refrigerant. An accumulator 27 and a separate accumulator 28 are connected to the intake port of the compressor 21 so as to allow the refrigerant to circulate therein, and a muffler 29 is connected to the discharge port so as to allow the refrigerant to circulate therein.

A known compressor, such as a scroll compressor, can be used as the compressor 21; it is not particularly limited.

The accumulator 27 and the separate accumulator 28 supply gas refrigerant to the compressor 21 and temporarily store liquid refrigerant to regulate the flow rate of the refrigerant between the single outdoor unit 2 and the four indoor units 4A, 4B, 4C, and 4D.

The accumulator 27 is placed between the compressor 21 and the separate accumulator 28 and is connected to the intake port of the compressor 21 so as to allow gas refrigerant to be supplied thereto. The separate accumulator 28 is placed between the accumulator 27 and the four-way valve 22 and is connected to the accumulator 27 so as to allow the gas refrigerant to be supplied thereto.

A pipe that connects the accumulator 27 and the separate accumulator 28 is provided with an intake-pipe sensor 31 that measures the temperature of refrigerant taken into the compressor 21.

The muffler 29 reduces pressure changes of the refrigerant discharged from the compressor 21 to prevent the occurrence of vibrations and noise due to the pressure changes.

The muffler 29 is placed between the compressor 21 and the four-way valve 22 and is connected to the discharge port of the compressor 21 so as to allow the refrigerant to circulate therein. A pipe that connects the muffler 29 and the compressor 21 is provided with a discharge pipe sensor 32 that measures the temperature of the refrigerant discharged from the compressor 21.

The four-way valve 22 controls the destination of the refrigerant discharged from the compressor 21 depending on the operating state of the air conditioner 1.

Specifically, during a cooling operation, the refrigerant discharged from compressor 21 is guided to the outdoor heat exchanger 23, and the refrigerant flowing out of indoor heat exchangers 41 is guided to the compressor 21. During a heating operation, the refrigerant discharged from the compressor 21 is guided to the indoor heat exchangers 41, and the refrigerant flowing out of the outdoor heat exchanger 23 is guided to the compressor 21.

The four-way valve 22 is connected so as to allow the refrigerant to flow out toward the separate muffler 29 and to allow the refrigerant to flow in from the muffler 29. Furthermore, the four-way valve 22 is connected to the outdoor heat exchanger 23 and the indoor heat exchangers 41 of the indoor units 4A, 4B, 4C, and 4D to allow the refrigerant to flow in or out.

A known valve can be used as the four-way valve 22; it is not particularly limited.

The outdoor heat exchanger 23 performs heat-exchange between outside air and the refrigerant. Specifically, during a cooling operation, the heat of the refrigerant is radiated to the outside air, and during a heating operation, the heat of the outside air is absorbed by the refrigerant. The outdoor heat exchanger 23 is placed between the four-way valve 22 and the receiver 33 and is connected to them so as to allow the refrigerant to circulate therein.

The outdoor heat exchanger 23 is provided with an outdoor-heat-exchanger sensor 34 that measures the temperature of the outdoor heat exchanger 23 and an outside-air-temperature sensor 35 that measures the temperature of the outside air.

The receiver 33 is placed between the outdoor heat exchanger 23 and the expansion valves 24A, 24B, 24C, and 24D and is connected to them so as to allow the refrigerant to circulate therein. The receiver 33 supplies liquid refrigerant to the expansion valves 24A, 24B, 24C, and 24D mainly during a cooling operation.

The expansion valves 24A, 24B, 24C, and 24D adiabatically expand the refrigerant passing therethrough to decrease the temperature and pressure of the refrigerant. The expansion valves 24A, 24B, 24C, and 24D are arranged for the indoor units 4A, 4B, 4C, and 4D, respectively, in other words, connected to them so as to allow the refrigerant to circulate therein. Specifically, the expansion valves 24A, 24B, 24C, and 24D are placed in four pipes diverging from a single pipe extending from the receiver 33 in correspondence with the respective indoor units 4A, 4B, 4C, and 4D.

Furthermore, the expansion valves 24A, 24B, 24C, and 24D are electronic expansion valves whose degrees of openings are controlled by the control unit 6.

The liquid-side control valves 25A, 25B, 25C, and 25D are parts connected to pipes extending from the indoor units 4A, 4B, 4C, and 4D and are control valves placed in correspondence with the respective indoor units 4A, 4B, 4C, and 4D. Furthermore, the liquid-side control valves 25A, 25B, 25C, and 25D are placed in correspondence with the expansion valves 24A, 24B, 24C, and 24D, between which silencing capillarys 36 and strainers 37 are placed.

The gas-side control valves 26A, 26B, 26C, and 26D are parts connected to pipes extending from the indoor units 4A, 4B, 4C, and 4D and are control valves placed in correspondence with the respective indoor units 4A, 4B, 4C, and 4D. The gas-side control valves 26A, 26B, 26C, and 26D are connected to the four-way valve 22 via a manifold 38 so as to allow the refrigerant to circulate therein.

As shown in Fig. 1, the indoor units 4A, 4B, 4C, and 4D are each mainly provided with an indoor heat exchanger 41, an intake sensor (measuring unit) 42, a central heat exchanger sensor 43, and a cooling-outlet heat exchanger sensor 44.

The indoor heat exchanger 41 is placed in each of the indoor units 4A, 4B, 4C, and 4D and performs heat-exchange between the room air and the refrigerant. Specifically, the indoor heat exchangers 41 cause the refrigerant to absorb the heat of the room air during a cooling operation and to radiate the heat of the refrigerant into the room air during a heating operation.

The indoor heat exchangers 41 of the indoor units 4A, 4B, 4C, and 4D are connected to the liquid-side control valves 25A, 25B, 25C, and 25D and the gas-side control valves 26A, 26B, 26C, and 26D, respectively, so as to allow the refrigerant to circulate therein.

The indoor heat exchangers 41 are provided with the intake sensors 42 that measure the temperatures of room air taken into the indoor units 4A, 4B, 4C, and 4D, the central heat exchanger sensors 43 that measure the temperatures of the central portions of the indoor heat exchangers 41, and the cooling-outlet heat exchanger sensors 44 that measure the temperatures of the ends of the indoor heat exchangers 41 serving as the refrigerant outlet during cooling.

The control unit 6 controls the operating state of the air conditioner 1. Specifically, the control unit 6 controls the compressor 21 and the degrees of opening of the expansion valves 24A, 24B, 24C, and 24D in the indoor units 4A, 4B, 4C, and 4D, the operating state of an outdoor fan (not shown), and the operating states of indoor fans (not shown) and the operation of louvers (not shown) in the indoor units 4A, 4B, 4C, and 4D.

The details of the control performed by the control unit 6 will be described later.

Next, the cooling operation and the heating operation of the thus-configured air conditioner 1 will be described.

When the cooling operation is to be performed, the four-way valve 22 is switched so that the discharge port of the compressor 21 and the outdoor heat exchanger 23 are connected, and the intake port of the compressor 21 and the indoor heat exchangers 41 are connected, as shown in Fig. 1.

The high-temperature, high-pressure refrigerant discharged from the compressor 21 flows into the outdoor heat exchanger 23 via the muffler 29 and the four-way valve 22. The refrigerant releases heat into the outside air in the outdoor heat exchanger 23 and condenses to become liquid refrigerant. The high-pressure liquid refrigerant is guided from the outdoor heat exchanger 23 to the expansion valves 24A, 24B, 24C, and 24D via the receiver 33.

The high-pressure liquid refrigerant adiabatically expands while passing through the expansion valves 24A, 24B, 24C, and 24D to become low-temperature, low-pressure refrigerant. The low-temperature, low-pressure refrigerant flows into the indoor heat exchangers 41 of the indoor units 4A, 4B, 4C, and 4D via the silencing capillarys 36, the strainers 37, and the liquid-side control valves 25A, 25B, 25C, and 25D. The refrigerant absorbs heat from the room air in the indoor heat exchangers 41 and evaporates to become gas refrigerant. On the other hand, the room air gives up its heat, thus being cooled.

The gas refrigerant is taken into the intake port of the compressor 21 via the gas-side control valves 26A, 26B, 26C, and 26D, the manifold 38, the four-way valve 22, the separate accumulator 28, and the accumulator 27. The taken-in refrigerant is compressed by the compressor 21 and is discharged through the discharge port as high-temperature, high-pressure refrigerant. Thereafter, the above process is repeated, so that the cooling operation is continued.

When the heating operation is to be performed, the four-way valve 22 is switched so that the discharge port of the compressor 21 and the indoor heat exchangers 41 are connected, and the intake port of the compressor 21 and the outdoor heat exchanger 23 are connected, as shown in Fig. 1.

The high-temperature, high-pressure refrigerant discharged from the compressor 21 flows into the indoor heat exchangers 41 via the muffler 29 and the four-way valve 22. The refrigerant releases heat into the room air in the indoor heat exchangers 41 and condenses to become liquid refrigerant. On the other hand, the room air absorbs the heat and is heated. The high-pressure liquid refrigerant is guided from the indoor heat exchangers 41 to the expansion valves 24A, 24B, 24C, and 24D via the liquid-side control valves 25A, 25B, 25C, and 25D, the strainers 37, and the silencing capillaries 36.

The high-pressure liquid refrigerant adiabatically expands while passing through the expansion valves 24A, 24B, 24C, and 24D to become low-temperature, low-pressure refrigerant. The low-temperature, low-pressure refrigerant flows into the outdoor heat exchanger 23 via the receiver 33. The refrigerant absorbs heat from the outside air in the outdoor heat exchanger 23 and evaporates to become gas refrigerant.

The gas refrigerant is taken into the intake port of the compressor 21 via the four-way valve 22, the separate accumulator 28, and the accumulator 27. The taken-in refrigerant is compressed by the compressor 21 and is discharged through the discharge port as high-temperature, high-pressure refrigerant. The above process is repeated thereafter, so that the cooling operation is continued.

Next, an overview of a heating thermostat operation in the air conditioner 1 of this embodiment will be described.

Here, an example in which the indoor unit 4A is carrying out a heating thermostat operation, and the other indoor units 4B, 4C, and 4D continue a heating operation will be described.

When a temperature measured by the intake sensor 42 exceeds the thermostat OFF point during the heating operation of the indoor unit 4A, control for switching the operating state of the indoor unit 4A from the heating operation to the heating thermostat operation is performed by the control unit 6.

Specifically, the operation of the indoor fan of the indoor unit 4A is stopped, and the expansion valve 24A is closed by the control unit 6. At that time, because the heating operation in the other indoor units 4B, 4C, and 4D is continued, the operation of the compressor 21 is continued.

Therefore, the expansion valve 24A is slightly opened to prevent an excessive pressure rise in an area (high-pressure line) connected to the discharge port of the compressor 21. That is, a small amount of refrigerant is made to flow into the indoor heat exchangers 41 of the indoor unit 4A in which the heating thermostat operation is performed.

When a predetermined time, for example, three minutes, has passed after the heating thermostat operation is started, the operation of the indoor fan is restarted, so that the room air is taken into the indoor unit 4A, and the temperature of the room air is measured by the intake sensor 42.

If the temperature measured by the intake sensor 42 (hereinafter referred to as "measured temperature") is a thermostat ON point (heating restart temperature) or higher, the heating thermostat operation of the indoor unit 4A is continued by the control unit 6, and after a further predetermined time has passed, measurement of the room air temperature is performed again by the intake sensor 42.

On the other hand, if the measured temperature is less than the thermostat ON point, the heating thermostat operation in the indoor unit 4A is terminated, and the heating operation is restarted by the control unit 6. That is, the operation of the indoor fan is restarted, and the expansion valve 24A is opened.

Also after the heating operation in the indoor unit 4A is restarted, the room air temperature is measured by the intake sensor 42 at regular time intervals, and when the measured temperature exceeds the thermostat OFF point, the heating thermostat operation is started.

Here, the details of the heating thermostat operation, which is a feature of the air conditioner 1 of this embodiment, will be described. Here, to simplify the explanation, a case where the heating thermostat operation is performed in the indoor unit 4A will be described.

Fig. 2 is a diagram illustrating changes in the measured temperature and the room air temperature during the heating operation and the heating thermostat operation. Fig. 3 is a flowchart illustrating control in the heating thermostat operation.

First, when a heating operation is started in the indoor unit 4A, a room air temperature TR and a measured temperature TS begin to increase, as shown in Fig. 2. At that time, the control unit 6 compares the measured temperature TS measured by the intake sensor 42 and the thermostat OFF point at predetermined time intervals to determine whether the measured temperature TS has reached the thermostat OFF point or higher (step S1).

Here, the thermostat OFF point and the thermostat ON point are temperatures determined on the basis of a set temperature (for example, 25 °C) input by the user of the indoor unit 4A.

If the measured temperature TS is less than the thermostat OFF point (NO), the heating operation is continued, and the above step S1 is repeated.

On the other hand, if the measured temperature TS is the thermostat OFF point or higher (YES), thermostat-OFF is performed, and the heating thermostat operation is started, as shown in Fig. 2. When the heating thermostat operation is started, thermostat-OFF measurement is started by the control unit 6 (step S2).

When the thermostat-OFF measurement is started, the control unit 6 selects a correction table on the basis of the master type (form) of the indoor unit 4A and determines a correction value (subtraction value) (step S3). The correction table is a table related to correction values for use in correcting the measured temperature and the round of comparison between a corrected measured temperature, described later, and the thermostat ON point.

A method for selecting a correction table based on the master type of the indoor unit will be described later.

This embodiment will be described as applied to an example in which the following table is selected.

**{Table 1}**

| Round | First | Second | Third |
|---|---|---|---|
| Correction value (°C) | -1 | -3 | -6 |

In the above correction table, in the first round of comparison between the corrected measured temperature and the thermostat ON point, a correction value of -1 °C is used, in the second round, a correction value of -3 °C is used, and in the third round, a correction value of -6 °C is used.

Here, although the correction table up to the third round of comparisons between the corrected measured temperature and the thermostat ON point is described, a correction table for higher rounds may be used; it is not particularly limited.

When a predetermined time (in this embodiment, three minutes) has passed after the heating thermostat operation is started, the control unit 6 compares a measured temperature after the first correction (hereinafter referred to as "corrected temperature") and the thermostat ON point to determine whether the corrected temperature is at the thermostat ON point or lower (step S4).

Specifically, the control unit 6 corrects the measured temperature using -1 °C, which is the first correction value in the above table, that is, calculates a corrected temperature by subtracting 1 °C from the measured temperature, and determines whether the corrected temperature is at the thermostat ON point or lower.

Here, during the heating thermostat operation, the room air temperature TR decreases with time, as shown in Fig. 2. On the other hand, the measured temperature TS measured by the intake sensor 42 receives radiant heat from the small amount of refrigerant that flows in the indoor heat exchanger 41 and thus increases with time.

If the corrected temperature is higher than the thermostat ON point (NO), the heating thermostat operation is continued, and after the lapse of a predetermined time, a correction value is determined (step S3), and the second corrected temperature and the thermostat ON point (step S4) are compared by the control unit 6.

The control unit 6 calculates a corrected temperature using -3 °C, which is a second correction value, in the above table to determine whether the corrected temperature is at the thermostat ON point or lower. In this embodiment, a case in which the corrected temperature is higher than the thermostat ON point (NO) also in the second comparison and in which the third comparison is performed will be described.

When the predetermined time has again passed after the second comparison, the control unit 6 calculates a corrected temperature using -6 °C, which is the third correction value in the above table, to determine whether the corrected temperature is at the thermostat ON point or lower.

In the third comparison, since the corrected temperature becomes the thermostat ON point or lower (YES), as shown in Fig. 2, the control unit 6 performs control for terminating the heating thermostat operation in the indoor unit 4A and restarting the heating operation.

Thus, increasing the correction value depending on the round of comparison between the corrected temperature and the thermostat ON point allows the heating thermostat operation to be terminated at an appropriate time and the heating operation to be restarted, even if the room temperature TR decreases and the measured temperature TS increases with time, as shown in Fig. 2.

When the heating operation in the indoor unit 4A is restarted, the operation of the indoor fan of the indoor unit 4A is restarted, and thus the room air is taken into the indoor unit 4A. Thus, the taken-in room air flows to the vicinity of the intake sensor 42, and hence the measured temperature TS, which is influenced by the radiant heat of the refrigerant, decreases, as shown in Fig. 2. Thereafter, when the heating operation is continued, the measured temperature TS begins to increase with time.

Here, to prevent the user from feeling uncomfortable, the indoor fan is operated when the room temperature is measured during the heating thermostat operation such that the amount of room air taken in is reduced as compared with the operation of the indoor fan during the heating operation. Therefore, when the heating operation is restarted, the measured temperature TS rapidly approaches the room temperature TR.

The control unit 6 restarts the heating operation and sets the correction value to 0 (step S5). Thereafter, the control unit determines whether the form of the indoor unit 4A is a wall-mounted designated master type (step S6).

If the form of the indoor unit 4A differs from a wall-mounted designated master type (NO), the control unit 6 returns to step S1 and repeats the above control.

On the other hand, if the form of the indoor unit 4A is the wall-mounted designated master type (YES), the control unit 6 calculates the temperature difference between the measured temperature TS and the set temperature when a determination period (in this embodiment, three minutes) has passed after the heating operation is restarted, and determines whether the temperature difference is a predetermined value (for example, 4 °C) or more (step S7).

If the above temperature difference is less than the predetermined value (NO), as shown in Fig. 2, the control unit 6 returns to step S1 and repeats the above control.

On the other hand, if the above temperature difference is the predetermined value or more (YES), the control unit 6 selects a new correction table for use in the next heating thermostat operation (step S8).

Fig. 4 is a diagram illustrating changes in the measured temperature and the room air temperature in the case where the temperature difference between the measured temperature TS and the set temperature is a predetermined value or more in step S7 of Fig. 3.

A conceivable case where the temperature difference is a predetermined value or more (YES) is specifically a case where the heating operation in the indoor unit 4A is repeated a plurality of times, and thus the room in which the indoor unit 4A is installed is sufficiently heated, and the wall surface is also sufficiently heated. That is, the above temperature difference reaches the predetermined value or more (YES) in the case where it is difficult for the heat of room air heated by the indoor unit 4A to be absorbed by the wall surface of the room, and thus it is difficult for the room air temperature to decrease quickly even if the indoor unit 4A performs the heating thermostat operation.

Fig. 4 shows a state in which the decrease in the room air temperature TR during the previous heating thermostat operation (heating thermostat operation at the left in Fig. 4) becomes gentle, and when the heating thermostat operation is terminated, the room air temperature TR is higher than the set temperature.

A new correction table selected by the control unit 6 differs from the correction table selected in step S3 in the correction value for use in correcting the measured temperature. Specifically, the rate of increase in the absolute value of the correction value with an increasing number of comparisons with the thermostat ON point is small.

This embodiment will be described as applied to an example in which the following table is selected.

**{Table 2}**

| Round | First | Second | Third | Fourth |
|---|---|---|---|---|
| Correction value (°C) | -1 | -2 | -3 | -4 |

In the above correction table, in the first round of comparison between the corrected temperature and the thermostat ON point, a correction value of -1 °C is used, in the second round, a correction value of -2 °C is used, in the third round, a correction value of -3 °C is used, and in the fourth round, a correction value of -4 °C is used.

Here, although a correction table up to the fourth round of comparisons between the corrected measured temperature and the thermostat ON point is described, a correction table for higher rounds may be used; it is not particularly limited.

When a new correction table is selected, the control unit 6 returns to step S1 and repeats the above control. Fig. 4 shows a case where the corrected temperature reaches the thermostat ON point or lower (YES) in the fourth round of comparison between the corrected temperature and the thermostat ON point, so that the heating thermostat operation in the indoor unit 4A is terminated, and the heating operation is restarted.

Next, the relationship among the operating state of the compressor 21, a control signal output from the indoor unit 4A to the compressor 21, the operating state of the indoor fan of the indoor unit 4A, the air temperature TR of the room in which the indoor unit 4A is installed, and the corrected temperature, which is the corrected temperature of the measured temperature TS measured by the intake sensor 42 of the indoor unit 4A when the indoor unit 4A is carrying out the heating thermostat operation, will be described with reference to Fig. 5.

The indoor unit 4A and the other indoor units 4B, 4C, and 4D perform the heating operation until time t1. Therefore, the compressor 21 is rotationally driven, and the actual rotational speed N is higher than 0 rps (rotations per second). At the same time, the control signal output from the indoor unit 4A to the compressor 21 is also ON, and the operating state of the indoor fan of the indoor unit 4A is also ON (rotationally driven). On the other hand, the room air temperature TR increases gradually because the heating operation is performed.

In Fig. 5, the operating state of the indoor unit 4A is switched to the heating thermostat operation at time t1. Therefore, the command to the compressor output from the indoor unit 4A to the compressor 21 indicates OFF, and the operating state of the indoor fan also becomes OFF. On the other hand, since the other indoor units 4B, 4C, and 4D continue the heating operation, the compressor 21 continues to be rotationally driven.

At that time, since the correction value held in the control unit 6 is 0 °C, the corrected temperature is equal to the room air temperature TR measured by the intake sensor 42 at time t1.

Here, the black dot (•) indicates the timing at which the intake sensor 42 measures the room air temperature TR.

The first heating thermostat operation in the indoor unit 4A is continued from time t1 to t2 (about three minutes), and thereafter the indoor fan is rotationally driven (ON) from time t2 to t3 (on the order of 45 seconds) to measure the room air temperature TR with the intake sensor 42. The rotational speed of the indoor fan during that time is lower than that during the heating operation. The rotational speed of the indoor fan is determined according to a rule based on the operating state etc. of the indoor unit 4A.

At time t3, the intake sensor 42 measures the room air temperature TR, and it is determined whether to continue the heating thermostat operation in the indoor unit 4A. In Fig. 5, the heating thermostat operation is continued, and the operation of the indoor fan is stopped (OFF) from time t3 to t4 (about three minutes).

Thereafter, the indoor fan is again rotationally driven (ON) from time t4 to t5 (on the order of 45 seconds).

On the other hand, the control unit 6 changes the correction value from 0 °C to -1 °C, calculates a corrected temperature on the basis of the measured temperature TS measured by the intake sensor 42 at time t5, and determines whether to continue the heating thermostat operation in the indoor unit 4A. In Fig. 5, the heating thermostat operation is continued, and the operation of the indoor fan is stopped (OFF) from time t5 to t6 (about three minutes).

Furthermore, the indoor fan is rotationally driven (ON) from time t6 to t7 (on the order of 45 seconds).

On the other hand, the control unit 6 changes the correction value from -1 °C to -2 °C, calculates a corrected temperature on the basis of the measured temperature TS measured by the intake sensor 42 at time t7, and determines whether to continue the heating thermostat operation in the indoor unit 4A. In Fig. 5, the heating thermostat operation is continued, and the operation of the indoor fan is stopped (OFF) .

At time t8, the heating operation in the other indoor units 4B, 4C, and 4D is also stopped, and the compressor 21 is stopped. That is, the rotational speed of the compressor 21 becomes 0 rps.

Then, the indoor fan is rotationally driven (ON) while the compressor 21 is stopped (from time t8 to t10). The rotational speed of the indoor fan during that time is controlled according to a rule different from those used for the heating operation and the heating thermostat operation.

On the other hand, the control unit 6 maintains the corrected temperature calculated at time t9 from time t7 to t9, and after time t9 has passed, measures the room air temperature TR occasionally with the intake sensor 42.

As shown at time t10, when the rotational driving of the compressor 21 is restarted, the heating thermostat operation in the indoor unit 4A is restarted, and the rotational driving of the indoor fan is stopped (OFF).

At that time, the control unit 6 again changes the correction value to 0 °C, calculates a corrected temperature on the basis of the measured temperature TS measured by the intake sensor 42 at time t10, and determines whether to continue the heating thermostat operation in the indoor unit 4A. In Fig. 5, the heating thermostat operation is continued, and the operation of the indoor fan is stopped (OFF).

Next, a method for selecting a correction table based on the master type of the indoor unit in step S3 of Fig. 2, described above, will be described.

Figs. 6 and 7 illustrate the arrangement of the intake sensor 42 and the indoor heat exchanger 41 in wall-mounted indoor units. Fig. 8 shows the arrangement of the intake sensor 42 and the indoor heat exchanger 41 in a floorstanding indoor unit.

Since the intake sensor 42 measures the temperature of room air flowing into the indoor heat exchanger 41, it is desirable that the intake sensor 42 be placed in the flow of the room air, in other words, in the vicinity of an upstream surface of the indoor heat exchanger 41, as shown in Fig. 6. However, placing the intake sensor 42 in such a position makes the intake sensor 42 prone to be heated by the radiant heat of the refrigerant flowing in the indoor heat exchangers 41 during the heating thermostat operation.

Therefore, in the case of an indoor unit in which the intake sensor 42 is placed upstream of the indoor heat exchanger 41, as shown in Fig. 6, the control unit 6 selects a correction table in which the absolute values of correction values are large. Specifically, a signal that specifies the master type of the indoor unit is transmitted from the indoor unit to the control unit 6. The control unit 6 stores a correction table corresponding to this indoor unit in advance, and the control unit 6 selects the correction table therefor.

Appropriate values are set for the correction values in the correction table by an experiment using an indoor unit of the corresponding master type.

On the other hand, as shown in Figs. 7 and 8, in the case where the intake sensor 42 is placed in a position out of the flow of the room air, in other words, a position away from the upstream surface of the indoor heat exchanger 41, it is difficult for the intake sensor 42 to receive the radiant heat of the refrigerant flowing in the indoor heat exchanger 41 during the heating thermostat operation, and it is thus difficult to be heated.

In this case, the control unit 6 selects a correction table in which the absolute values of correction values are small.

With the above configuration, by starting the heating operation early by increasing the absolute values of correction values as the number of comparisons between the corrected temperature and the thermostat ON point increases, non-heating due to an increase in a period during which the heating operation is stopped, that is, the period of the heating thermostat operation, can be prevented.

Specifically, in the case where the refrigerant is made to flow into the indoor unit 4A in the heating thermostat operation, and when the measured value in the measuring unit, that is, the measured temperature, is increased due to the radiant heat of the flowing refrigerant, the measured temperature TS is higher than the actual room air temperature TR. This increases the time required for the measured temperature TS to decrease to a heating restart temperature, which delays restarting of the heating operation, thus causing non-heating.

Thus, by performing correction involving subtracting the measured temperature TS every time a predetermined time has passed after the heating operation is stopped, comparing the corrected temperature and the thermostat ON point, and restarting the heating operation when the corrected temperature reaches the thermostat ON point or lower, a delay in restarting the heating operation can be reduced.

Furthermore, by increasing the correction value of the measured temperature TS according to the time that has passed after the heating operation is stopped, the corrected temperature reaches the thermostat ON point or lower in a shorter time, so that a delay in restarting the heating operation can be prevented.

On the other hand, since the measured temperature TS, not a set temperature input by the user, is corrected, the room air temperature TR can be controlled accurately.

That is, since the thermostat ON point is determined on the basis of a set temperature input by the user, repeating the correction of the set temperature may cause the original set temperature set by the user to become unclear, thus posing the possibility that the thermostat ON point will become an unsuitable temperature. In contrast, in the case where the measured temperature TS is corrected, the set temperature input by the user is not corrected, and thus there is no possibility that the set temperature become unclear, and that the thermostat ON point becomes an unsuitable temperature.

In the case where the temperature difference between the measured temperature TS and the set temperature when a determination period has passed after the heating operation is restarted is the predetermined value or more, starting of the heating operation can be delayed by selecting and using a correction table in which the absolute values of correction values are small during the next heating thermostat operation, and thus overheating due to a decrease in a period during which the heating operation is stopped, that is, the period of the heating thermostat operation, can be prevented.

Specifically, in the case where the room is sufficiently heated because a heating operation is performed for a fixed period, that is, in the case where the measured temperature TS when a determination time has passed after the heating operation is stopped is higher than the set temperature by a predetermined value or more, the absolute values of correction values for the measured temperature TS are set to be small. This increases the time required for the corrected temperature to reach the thermostat ON point or lower as compared with a case where the temperature difference described above is less than the predetermined value. In other words, the time at which the heating operation is restarted can be delayed, and thus overheating can be prevented.

Although the foregoing embodiment has been described as applied to an example in which the control unit 6 selects a correction table depending on the operating state, the correction table selected may be changed depending on the preference of the user etc.; it is not particularly limited.

By allowing the correction table to be changed, the magnitudes of the absolute values of correction values can be changed, and thus the value of the corrected temperature can be changed. As a result, the time required for the corrected temperature to reach a heating restart temperature or lower can be changed, and the time at which the heating operation is restarted can be changed.

Furthermore, although the foregoing embodiment has been described as applied to an example in which the determination of whether the corrected temperature during the heating thermostat operation is at the thermostat ON point or lower is repeated at predetermined time intervals, the predetermined time may be increased gradually depending on the round of determination; it is not particularly limited.

Since the timing at which control for determining whether to restart the heating operation can be changed by increasing the predetermined time depending on the round of determination, the time at which the heating operation is restarted can be changed.

### {Reference Signs List}

- 1: air conditioner
- 2: outdoor unit
- 4A, 4B, 4C, 4D: indoor unit
- 6: control unit
- 42: intake sensor (measuring unit)

## Claims

1. An air conditioner including a plurality of indoor units (4A, 4B, 4C, 4D) for a single outdoor unit (2), in which a heating operation can be stopped in one of the indoor units (4A, 4B, 4C, 4D) and heating operations can be performed in other indoor units, the air conditioner comprising:
measuring units (42) that measure the temperatures (TS) of air taken into the indoor units (4A, 4B, 4C, 4D); and
a control unit (6) that controls restarting of the next heating operation in the one indoor unit (4A) in which the heating operation was stopped by correcting the measured temperature (TS) in the measuring unit at predetermined time intervals by means of a correction value and by comparing the corrected measured temperature and a heating restart temperature,
**characterized in that** the correction of the measured temperature is a correction whereby the absolute value of said correction value is subtracted from the measured temperature; said correction value increases according to the time that has passed after the heating operation is stopped; and wherein the absolute value of the correction value is dependent on the arrangement of the measuring unit (42) with respect an indoor heat exchanger (41).

2. The air conditioner according to Claim 1, wherein
the control unit (2) controls restarting of the next heating operation of the indoor unit (4A, 4B, 4C, 4D) in which the last heating operation was stopped after a plurality of heating operations are performed by correcting the measured temperature in the measuring unit at the predetermined time intervals and by comparing the corrected measured temperature and the heating restart temperature; and
if the temperature difference between the measured temperature when a determination period has passed after the last heating operation is started and a set temperature is a predetermined value or more, the correction of the measured temperature is a correction whereby the absolute value of a subtraction value for the measured temperature when the next heating operation is stopped is smaller than that in a case where the temperature difference is less than the predetermined value.

3. The air conditioner according to any one of Claims 1 or 2, wherein the length of the predetermined time can be changed.

## Patentansprüche

1. Klimaanlage mit einer Mehrzahl von Innenraumeinheiten (4A, 4B, 4C, 4D) für eine einzelne Außeneinheit (2), bei der ein Heizbetrieb in einer der Innenraumeinheiten (4A, 4B, 4C, 4D) gestoppt werden kann und Heizbetriebe in anderen Innenraumeinheiten durchgeführt werden können, wobei die Klimaanlage aufweist:
Messeinheiten (42), die die Temperaturen (TS) der in die Innenraumeinheiten (4A, 4B, 4C, 4D) angesaugten Luft messen; und
eine Steuereinheit (6), die das Neustarten des nächsten Heizbetriebs in der einen Innenraumeinheit (4A), in welcher der Heizbetrieb gestoppt wurde, durch Korrigieren der gemessenen Temperatur (TS) in der Messeinheit in vorbestimmten Zeitintervallen mittels eines Korrekturwerts und durch Vergleichen der korrigierten gemessenen Temperatur und einer Heiz-Neustart-Temperatur steuert,
**dadurch gekennzeichnet, dass** die Korrektur der gemessenen Temperatur eine Korrektur ist, bei welcher der Absolutbetrag des Korrekturwerts von der gemessenen Temperatur subtrahiert wird, der Korrekturwert entsprechend der Zeit, die vergangen ist, nachdem der Heizbetrieb gestoppt wurde, steigt, und wobei der Absolutbetrag des Korrekturwerts von der Anordnung der Messeinheit (42) in Bezug auf einen Innenraum-Wärmetauscher (41) abhängt.

2. Klimaanlage nach Anspruch 1, wobei
die Steuereinheit (2) den Neustart des nächsten Heizbetriebs der Innenraumeinheit (4A, 4B, 4C, 4D) steuert, in welcher der letzte Heizbetrieb gestoppt wurde, nach Ausführen einer Mehrzahl von Heizbetrieben durch Korrigieren der gemessenen Temperatur in der Messeinheit in den vorbestimmten Zeitintervallen und durch Vergleichen der korrigierten gemessenen Temperatur und der Heiz-Neustart-Temperatur; und falls der Temperaturunterschied zwischen der gemessenen Temperatur, wenn ein Bestimmungszeitraum nach dem Start des letzten Heizbetriebs vergangen ist, und einer eingestellten Temperatur einen vorgegebenen Wert erreicht oder höher ist, ist die Korrektur der gemessenen Temperatur eine Korrektur, bei welcher der Absolutbetrag eines Subtraktionswerts für die gemessene Temperatur, wenn der nächste Heizbetrieb gestoppt wird, kleiner ist als dieser in einem Fall, in dem der Temperaturunterschied kleiner als der vorbestimmte Wert ist.

3. Klimaanlage nach einem der Ansprüche 1 oder 2, wobei die Dauer der vorbestimmten Zeit geändert werden kann.

## Revendications

1. Climatiseur comportant une pluralité d'unités intérieures (4A, 4B, 4C, 4D) pour une seule unité extérieure (2), dans lequel une opération de chauffage peut être arrêtée dans l'une des unités intérieures (4A, 4B, 4C, 4D) et des opérations de chauffage peuvent être réalisées dans d'autres unités intérieures, le climatiseur comprenant :
des unités de mesure (42) qui mesurent la température (TS) d'air prélevé dans les unités intérieures (4A, 4B, 4C, 4D) ; et
une unité de commande (6) qui commande le redémarrage de la prochaine opération de chauffage dans ladite unité intérieure (4A) dans laquelle l'opération de chauffage a été arrêtée en corrigeant la température (TS) mesurée dans l'unité de mesure à des intervalles de temps prédéterminés au moyen d'une valeur de correction et en comparant la température mesurée corrigée et une température de redémarrage de chauffage,
**caractérisé en ce que** la correction de la température mesurée est une correction au moyen de laquelle la valeur absolue de ladite valeur de correction est soustraite de la température mesurée ; ladite valeur de correction augmente selon le temps qui s'est écoulé après l'arrêt de l'opération de chauffage; et dans lequel la valeur absolue de la valeur de correction dépend de l'agencement de l'unité de mesure (42) par rapport à un échangeur de chaleur intérieur (41).

2. Climatiseur selon la revendication 1, dans lequel
l'unité de commande (2) commande le redémarrage de la prochaine opération de chauffage de l'unité intérieure (4A, 4B, 4C, 4D) dans laquelle la dernière opération de chauffage a été arrêtée après réalisation d'une pluralité d'opérations de chauffage en corrigeant la température mesurée dans l'unité de mesure aux intervalles de temps prédéterminés et en comparant la température mesurée corrigée et la température de redémarrage de chauffage ; et
si la différence de température entre la température mesurée lorsqu'une période de détermination s'est écoulée après démarrage de la dernière opération de chauffage et qu'une température réglée est une valeur prédéterminée ou supérieure, la correction de la température mesurée est une correction au moyen de laquelle la valeur absolue d'une valeur de soustraction pour la température mesurée lorsque la prochaine opération de chauffage est arrêtée est plus petite que celle dans un cas où la différence de température est inférieure à la valeur prédéterminée.

3. Climatiseur selon l'une quelconque des revendications 1 ou 2, dans lequel la longueur du temps prédéterminé peut être changée.
